# EUROPÄISCHE PATENTSCHRIFT

(11) **EP 3 781 345 B1**
(45) Veröffentlichungstag und Bekanntmachung des Hinweises auf die Patenterteilung: **29.05.2024**
(21) Anmeldenummer: 18750329.7
(22) Anmeldetag: 20.07.2018
(51) Int. Cl.: B23K 11/30, G06K 7/00, H01Q 1/00

(54) **VERWENDUNG EINER MULTIRINGANTENNE IN ELEKTRODENKAPPENFRÄSVORRICHTUNGEN ZUR ÜBERWACHUNG VON METALLISCHEN ROTATIONSSYMMETRISCHEN FRÄSWERKZEUGEN UND ELEKTRODENKAPPENFRÄSVORRICHTUNGEN**
USE OF A MULTI-RING ANTENNA IN ELECTRODE CAP MILLING DEVICES FOR MONITORING METALLIC ROTATIONALLY SYMMETRICAL MILLING TOOLS AND ELECTRODE CAP MILLING DEVICES
UTILISATION D'UNE ANTENNE MULTI-ANNEAUX DANS DES DISPOSITIFS DE FRAISAGE DE CAPUCHONS D'ÉLECTRODES POUR LA SURVEILLANCE D'OUTILS DE FRAISAGE MÉTALLIQUES À SYMÉTRIE DE RÉVOLUTION ET DE DISPOSITIFS DE FRAISAGE DE CAPUCHONS D'ÉLECTRODES

(30) Priorität: 17.04.2018 DE 102018003123
(43) Veröffentlichungstag der Anmeldung: 24.02.2021
(73) Patentinhaber: Bräuer Systemtechnik GmbH, 09456 Annaberg-Buchholz (DE)
(72) Erfinder: SONNTAG, Frank, 09419 Thum (DE)
(74) Vertreter: Weidner Stern Jeschke
(86) Internationale Anmeldenummer: PCT/EP2018/025199
(87) Internationale Veröffentlichungsnummer: WO 2019/201414

(56) Entgegenhaltungen:
- WO-A2-2009/076496
- US-A1- 2015 332 071

## Beschreibung

Die Erfindung betrifft die Verwendung einer Multiringantenne in Elektrodenkappenfräsvorrichtungen für die Metallbearbeitung.

Derartige Vorrichtungen für die Metallbearbeitung werden für das Nacharbeiten von Elektrodenkappen in der Widerstandsschweißtechnik eingesetzt. Elektroden für die Widerstandsschweißtechnik, die in Roboter- oder Handzangen geführt werden, müssen zur Gewährleistung der Festigkeit und zur Reproduzierbarkeit der Schweißpunkte in Abhängigkeit vom Verschleiß an den Kappen nachbearbeitet werden. Dieser Bearbeitungsvorgang darf auf Grund der Einbindung in automatisierte Abläufe nur geringe Zeit erfordern, er soll die ursprüngliche Form der Kappe weitgehend wieder erzeugen und zudem durch einen möglichst geringen Materialabtrag eine lange Einsatzdauer der Kappe gewährleisten. Dafür werden bekannterweise Vorrichtungen eingesetzt, die in einer angetriebenen Fräseraufnahme eine Schneidplatte enthalten (DE 201 00 102 U1).

Eine Wirkung derartiger Vorrichtungen ist es, dass mit jeder Bearbeitung Material abgetragen wird, so dass die Kappe an Volumen verliert und ihre Lebensdauer eingeschränkt ist. Zudem müssen die entstandenen Späne zuverlässig nach außen abgeführt werden, so dass eine besondere konstruktive Ausgestaltung der Fräseraufnahme und eine Zusatzeinrichtung zum Ableiten der Späne erforderlich sind.

Die DE 199 30 485 C1 beschreibt eine Vorrichtung zum Reformieren von Schweißelektrodenkappen, bei welcher die Schweißelektrodenkappen paarweise mit gegeneinandergerichteten Arbeitsflächen in einer Schweißzange formgebend bearbeitet werden. Dabei besteht die formgebende Oberfläche aus mehreren um die Werkzeugachse angeordneten Oberflächenabschnitten.

Bekannt sind Vorrichtungen zum Fräsen von Werkstücken mit Rotationsflächen, vorzugsweise von Elektrodenkappen für die Widerstandsschweißtechnik, bestehend aus einer pneumatisch oder elektrisch angetriebenen Fräseraufnahme, die aus einem lösbar miteinander verbundenem Oberteil und Unterteil besteht und in deren Fräseraufnahme zwei Schneidplatten (3, 4) befestigt sind, von denen eine als Flankenschneider (4), die andere als Stirnflächenschneider (3) ausgebildet ist, und dass zwischen ihnen Ausschnitte (5) zur Ableitung der Späne angeordnet sind.

Auch bekannt sind Lösungen, gemäß denen die Vorrichtung zur Bearbeitung rotationssymmetrischer metallischer Werkstücke, insbesondere für das Nacharbeiten von Elektrodenkappen mit einem pneumatisch oder elektrisch angetriebenen Bearbeitungskopf mit einer in einer Aussparung im Bearbeitungskopf gelagerten Schneidplatte in anderen Ausführungen zusätzlich mit mindestens einer Formwalze mit im Bearbeitungskopf integrierter Lagerung ausgestattet ist, wobei die Konturen der Schneidplatte und in anderen Ausführungen auch der Formwalzen In ihrem Arbeitsbereich der angestrebten Werkstückgeometrie entsprechen.

Problematisch bei der Verwendung von solchen oben beschriebenen Elektrodenkappenfräsern kann eine fehlerhafte Auswahl des Fräswerkzeuges sein.

Durch die Auswahl des Fräswerkzeuges mit einer in ihren Konturen definierten Schneidplatte wird letztendlich die Form der Elektrodenkappe bestimmt.

Im Bereich des Einsatzes von hochautomatisierten Vorgängen, von welchen bei Einsatz von Schweißrobotern und ebenfalls automatisierten Kappenfräsern, auszugehen ist, muss eine Falschauswahl von Fräswerkzeugen verhindert werden.

Nachteilig ist es, dass eine manuelle Auswahl des Fräswerkzeuges jedoch zu einer Falschauswahl führen und damit hohe Folgekosten verursachen kann.

Es ist bekannt, in elektronischen Verfahren zur Überwachung von rotationssymmetrischen metallischen Werkstücken, ringförmige Antennen bzw. mehrschichtige Antennen, sogenannte Multiringantennen einzusetzen.

So beansprucht die US 2009/0295659 A1 eine RFID-Antennenanordnung, eine Magnetfeld-Erzeugungsvorrichtung sowie eine Magnetfeld-Fokussieranordnung.

Dabei wird beansprucht eine RFID-Antennenanordnung, die so konfiguriert ist, dass sie mit einem Trägersignal erregt wird, wobei die RFID-Antennenanordnung umfasst eine induktive Komponente mit einer Schleifenantennenanordnung, wobei der Umfang der Schleifenantennenanordnung nicht mehr als 25% der Wellenlänge des Trägersignals beträgt und mindestens eine kapazitive Komponente, die mit der induktiven Komponente gekoppelt ist.

Diese Vorrichtung weist gemäß Anspruch 2 eine zweite Schlitzanordnung auf, die an die erste Schlitzanordnung angrenzt.

Des Weiteren wird beansprucht eine besondere Ausstattung der RFID-Antennenanordnung, welche eine Mehrsegment-Schleifenantennenanordnung enthält, wobei die Mehrsegmentschleifenantennenanordnung umfasst: mindestens ein erstes Antennensegment mit mindestens einem ersten Phasenschiebeelement, das so konfiguriert ist, dass es die Phasenverschiebung des Trägersignals innerhalb des mindestens einen ersten Antennensegments verringert und wobei mindestens ein zweites Antennensegment mindestens ein zweites Phasenschiebeelement umfasst, das so konfiguriert ist, dass es die Phasenverschiebung des Trägersignals innerhalb des mindestens einen zweiten Antennensegments verringert, mindestens eine Fernfeldantennenanordnung; wobei die Länge jedes Antennensegments nicht mehr als 25% der Wellenlänge des Trägersignals beträgt; und mindestens eine passende Komponente, die konfiguriert ist, um die Impedanz der Mehrsegment-Schleifenantennenanordnung einzustellen.

Die WO 2009/049191 A2 (PCT/US2008/079555) beansprucht eine Patchantenne sowie ein Verfahren zu deren Herstellung.

Diese Patchantenne weist mehrere Strahlerschichten auf (10), wobei jede Strahlerschicht umfasst: ein erstes flächenförmiges dielektrisches Trägermaterial (14); ein Strahlerelement (12) auf einer ersten Seite des dielektrischen Trägermaterials (14); einen Graben (16) in dem dielektrischen Trägermaterial (14) um einen Umfang des Strahlerelements (12) herum, und der eine durchgehende innere Umfangsseitenwand (18) und eine durchgehende äußere Umfangsseitenwand (20) bildet; mehrere Streifen (28), die sich zwischen der inneren Umfangsseitenwand (18) und der äußeren Umfangsseitenwand (20) erstrecken, wobei die mehreren Streifen (28) dazu fungieren, einen inneren Trägermaterialteil (24) in einem festen physischen Verhältnis zu einem äußeren Trägermaterialteil (26) des dielektrischen Trägermaterials (14) zu halten; eine leitende Beschichtung, die auf der inneren Umfangsseitenwand (18) und/oder der äußeren Umfangsseitenwand (20) angeordnet ist; und ein zweites flächenförmiges dielektrisches Trägermaterial (36) mit einer dritten Seite und einer gegenüberliegenden vierten Seite, wobei das zweite dielektrische Trägermaterial (36) folgendes umfasst: eine Mikrostreifenzuführungsteitung (32), die auf der dritten Seite angeordnet ist; und eine Massefläche (38), die auf der vierten Seite angeordnet ist, wobei die Massefläche (38) ein Loch (40) zwischen dem Strahlerelement (12) und der Mikrostreifenzuführungsleitung (32) aufweist.

Die CN203883119 beansprucht eine Mehrschicht-Mikrostreifenantenne mit einem Abstandsring mit den Merkmalen, dass sie eine Grundplatte (4) und eine Mehrzahl von auf einer Grundplatte (4) angeordneten Mikrostreifenantennen umfasst, wobei jede der Mikrostreifenantennen in der Reihenfolge der Strahlung angeordnet ist und ein dielektrisches Trägermaterial, das mit einer koaxialen Zuführung zum Zuführen des Kühler unter dem Kühler und der koaxialen Durchführung durch das dielektrische Trägermaterial durch die Grundplatte (4) versehen ist, (5) auf dem dielektrischen Trägermaterial der Mikrostreifenantenne in der unteren Schicht jeder benachbarten zweischichtigen Mikrostreifenantenne angeordnet ist. Die von der koaxialen Zuführungsleitung der oberen Mikrostreifenantenne gebildete Zuführungsfläche ist auf den metallisierten Durchkontaktierungen verteilt.

In weiterer Ausgestaltung beansprucht diese Lösung, abweichend vom im ersten Anspruch beschriebenen zweischichtigen, einen mehrschichtigen Aufbau der Mehrschicht-Mikrostreifenantenne.

Aufgabe der Erfindung ist es deshalb, eine Lösung vorzuschlagen, mit welcher eine elektronische Kontrolle der Auswahl der Fräswerkzeuge realisiert werden kann.

Erfindungsgemäß wird diese Aufgabe durch die im Anspruch 1 offenbarte Verwendung einer mehrschichtigen ringförmigen Antenne gelöst, nachfolgend bezeichnet als Multiringantenne.

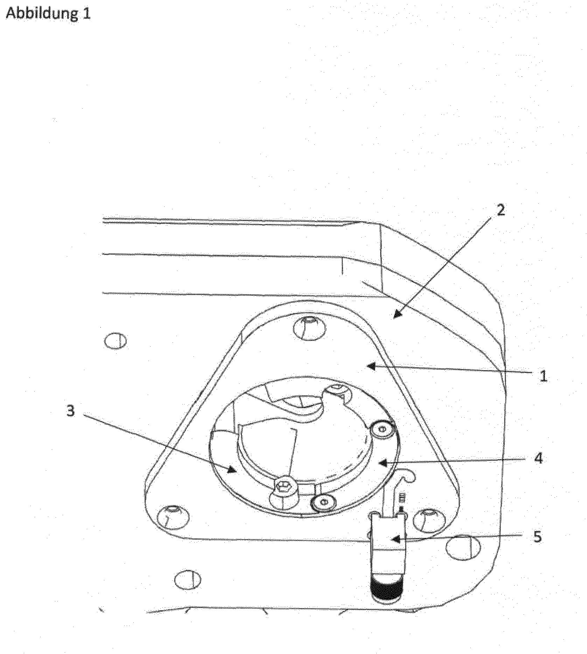

Abbildung 1 zeigt die Anordnung der erfindungsgemäß verwendeten Multiringantenne 1 in einer Elektrodenkappenfräsvorrichtung für die Metallbearbeitung von Elektrodenkappen mittels rotationssymmetrischen metallischen Fräswerkzeugen einer Elektrodenkappenfräsvorrichtung.

Eine Multiringantenne 1 ist auf einem Werkzeugträger 2 in der Nähe eines rotationssymmetrischen Elektrodenkappenfräwerkzeuges, angeordnet, dass die Multiringantenne 1 das rotationssymmetrische Fräswerkzeug umschließt.

Dabei ist die Multiringantenne 1 über einen Antennenanschluss 5 mit der Prozessüberwachungs- und Kontrolltechnik verbunden

Das rotationssymmetrische Fräswerkzeug 3 trägt einen RFID Transponder 4.

RFID bezeichnet eine Technologie für Sender-Empfänger-Systeme, welche zum automatischen und berührungslosen Authentifizieren und Lokalisieren von Objekten und Lebewesen mit Radiowellen eingesetzt werden.

Ein RFID-System besteht aus einem Transponder, der sich am oder im Gegenstand bzw. Lebewesen befindet und einen kennzeichnenden Code enthält, sowie einem Lesegerät zum Auslesen dieser Kennung.

Der RFID Transponder 4 ist in seiner Lage auf dem rotationssymmetrischen Fräswerkzeug 3 so angeordnet, dass er sich im elektromagnetischen Ringfeld der Multiringantenne 1 befindet.

Auf dem Werkzeugträger 2 ist die Multiringantenne 1 so angeordnet, dass die Abfrage des RFID Transponders 4 am rotationssymmetrischen Bauteil in jeder Position in Bewegung und im Stillstand möglich ist.

Zur Überwachung des rotationssymmetrischen Fräswerkzeuges 3 kann der RFID Transponder 4 mit dieser Multiringantenne 1 beschrieben und ausgelesen werden. Dadurch ist es möglich, nicht nur das Vorhandensein des rotationssymmetrischen Fräswerkzeuges 3 zu erkennen, sondern gezielte Informationen auf den RFID Transponder 4 des rotationssymmetrischen Fräswerkzeuges 3 zu schreiben und diese auszulesen und somit zu überwachen.

So ist es insbesondere zur Prozessüberwachung möglich und von Vorteil, dass Informationen wie Werkzeugtyp, Seriennummer des Werkzeuges, Einsatzzeiten, Standzeiten sowie ebenfalls beispielsweise Werkzeugtyp des vorher eingesetzten Werkzeuges, Seriennummer des vorher eingesetzten Werkzeuges, Einsatzzeiten des vorher eingesetzten Werkzeuges, Standzeiten des vorher eingesetzten Werkzeuges ausgelesen werden können.

Diese zu überwachenden und abzurufenden Informationen ermöglichen eine direkte Prozessüberwachung und Kontrolle des aktuellen Werkzeuges sowie auch für die Prozessüberwachung vorteilhafte Daten zur statistischen Erfassung und Auswertung prozessrelevanter Daten und Informationen.

## Patentansprüche

1. Verwendung einer Multiringantenne (1) in Elektrodenkappenfräsvorrichtungen zur Überwachung von metallischen rotationssymmetrischen Fräswerkzeugen (3) bei Verwendung eines RFID Systems, wobei die Multiringantenne gebildet ist aus Schichtungen, elektrisch leitender Schichten und Trennung selbiger durch Isolationsschichten, Verbindung der elektrisch leitenden Schichten über ein Anschlussmittel sowie Ausstattung mit einem RFID System, wobei die Multiringantenne (1)
auf einem Werkzeugträger (2) in der Nähe eines rotationssymmetrischen Fräswerkzeuges (3)
so angeordnet ist, dass die Multiringantenne (1) das rotationssymmetrische Fräswerkzeuges (3)
umschließt und dieses rotationssymmetrische Fräswerkzeug (3) einen RFID Transponder (4) trägt, wobei dieser RFID Transponder (4) in seiner Lage auf dem rotationssymmetrischen Fräswerkzeug (3) so angeordnet ist, dass er sich im elektromagnetischen Ringfeld der Multiringantenne (1) befindet und auf dem Werkzeugträger (2) die Multiringantenne (1) so angeordnet ist, dass die Abfrage des RFID Transponders (4) am rotationssymmetrischen Fräswerkzeug (3) in jeder Position in Bewegung und im Stillstand möglich ist.

2. Elektrodenkappenfräsvorrichtungen, aufweisend eine mehrschichtige, ringförmige Multiringantenne (1) und ein RFID System zur Überwachung von rotationssymmetrischen Fräswerkzeugen (3) welche bei der Bearbeitung rotationssymmetrischer Werkstücke miteinander kommunizierend angeordnet sind und die Multiringantenne (1) auf einem Werkzeugträger (2) in der Nähe eines rotationssymmetrischen Fräswerkzeuges (3) so angeordnet ist, dass die Multiringantenne (1) das rotationssymmetrische Fräswerkzeug (3) umschließt und dieses rotationssymmetrische Werkzeug (3) einen RFID Transponder (4) trägt, wobei dieser RFID Transponder (4) in seiner Lage auf dem rotationssymmetrischen Fräswerkzeug (3) so angeordnet ist, dass er sich im elektromagnetischen Ringfeld der Multiringantenne (1) befindet und
auf dem Werkzeugträger (2) die Multiringantenne (1) so angeordnet ist, dass die Abfrage des RFID Transponders (4) am rotationssymmetrischen Fräswerkzeug (3) in jeder Position in Bewegung und im Stillstand möglich ist.

## Claims

1. Use of a multi-ring antenna (1) in electrode cap milling devices for monitoring metallic rotationally-symmetrical milling tools (3) when using an RFID system, wherein the multi-ring antenna is formed from layers of electrically-conductive layers and separation of the same by insulation layers, connection of the electrically-conductive layers via a connection means, and equipment with an RFID system, wherein the multi-ring antenna (1) is arranged on a tool carrier (2) in the vicinity of a rotationally-symmetrical milling tool (3) in such a way that the multi-ring antenna (1) encloses the rotationally-symmetrical milling tool (3) and this rotationally-symmetrical milling tool (3) carries an RFID transponder (4), wherein this RFID transponder (4) is arranged on the rotationally-symmetrical milling tool (3) in a posture such that it is located in the electromagnetic ring field of the multi-ring antenna (1) and the multi-ring antenna (1) is arranged on the tool carrier (2) in such a way that interrogation of the RFID transponder (4) on the rotationally symmetrical milling tool (3) is possible in any position in motion and at a standstill.

2. Electrode cap milling devices, comprising a multi-layer, annular multi-ring antenna (1) and an RFID system for monitoring rotationally-symmetrical milling tools (3) which are arranged to communicate with one another during the machining of rotationally-symmetrical workpieces, and the multi-ring antenna (1) is arranged on a tool carrier (2) in the vicinity of a rotationally-symmetrical milling tool (3) in such a way in that the multi-ring antenna (1) surrounds the rotationally-symmetrical milling tool (3) and the rotationally symmetrical tool (3) carries an RFID transponder (4), wherein this RFID transponder (4) is arranged in its position on the rotationally-symmetrical milling tool (3) in such a way that it is located in the electromagnetic ring field of the multi-ring antenna (1) and the multi-ring antenna (1) is arranged on the tool carrier (2) in such a way that it is possible to interrogate the RFID transponder (4) on the rotationally-symmetrical milling tool (3) in any position in motion and at a standstill.

## Revendications

1. Utilisation d'une antenne multi-anneaux (1) dans des dispositifs de fraisage de capuchons d'électrodes pour la surveillance d'outils de fraisage métalliques à symétrie de rotation (3) lors de l'utilisation d'un système RFID, l'antenne multi-anneaux étant formée par stratification de couches électriquement conductrices et séparation de celles-ci par des couches isolantes, liaison des couches électriquement conductrices par le biais d'un moyen de connexion ainsi qu'installation d'un système RFID, l'antenne multi-anneaux (1) étant disposée sur un porte-outils (2) à proximité d'un outil de fraisage à symétrie de rotation (3), de telle sorte que l'antenne multi-anneaux (1) entoure l'outil de fraisage à symétrie de rotation (3) et cet outil de fraisage à symétrie de rotation (3) porte un transpondeur RFID (4), ce transpondeur RFID (4) étant disposé dans sa position sur l'outil de fraisage à symétrie de rotation (3) de telle sorte qu'il se trouve dans le champ électromagnétique annulaire de l'antenne multi-anneaux (1) et l'antenne multi-anneaux (1) étant disposée sur le porte-outils (2) de telle sorte que l'interrogation du transpondeur RFID (4) sur l'outil de fraisage à symétrie de rotation (3) soit possible dans chaque position en mouvement et à l'arrêt.

2. Dispositifs de fraisage de capuchons d'électrodes, présentant une antenne multi-anneaux multicouche annulaire (1) et un système RFID pour la surveillance d'outils de fraisage à symétrie de rotation (3) qui sont disposés de manière à communiquer les uns avec les autres lors de l'usinage de pièces à symétrie de rotation, et l'antenne multi-anneaux (1) étant disposée sur un porte-outil (2) à proximité d'un outil de fraisage à symétrie de rotation (3) de telle sorte que l'antenne multi-anneaux (1) entoure l'outil de fraisage (3) à symétrie de rotation et cet outil à symétrie de rotation (3) porte un transpondeur RFID (4), ce transpondeur RFID (4) étant disposé dans sa position sur l'outil de fraisage (3) à symétrie de rotation de telle sorte qu'il se trouve dans le champ électromagnétique annulaire de l'antenne multi-anneaux (1) et l'antenne multi-anneaux (1) étant disposée sur le porte-outil (2) de telle sorte que l'interrogation du transpondeur RFID (4) sur l'outil de fraisage (3) à symétrie de rotation est possible dans chaque position en mouvement et à l'arrêt.
